# EUROPÄISCHE PATENTSCHRIFT

(11) **EP 4 740 359 B1**
(45) Veröffentlichungstag und Bekanntmachung des Hinweises auf die Patenterteilung: **05.08.2026**
(21) Anmeldenummer: 25714478.2
(22) Anmeldetag: 19.03.2025
(51) Int. Cl.: H04L 9/32

(54) **VERFAHREN ZUR SICHEREN AUSSTATTUNG VON SYSTEMEN MIT EINEM INDIVIDUELLEN ZERTIFIKAT**
METHOD FOR SECURELY EQUIPPING SYSTEMS WITH AN INDIVIDUAL CERTIFICATE
PROCÉDÉ POUR ÉQUIPER DES SYSTÈMES D'UN CERTIFICAT INDIVIDUEL EN TOUTE SÉCURITÉ

(30) Priorität: 21.05.2024 DE 102024001629
(43) Veröffentlichungstag der Anmeldung: 13.05.2026
(73) Patentinhaber: Mercedes-Benz Group AG, 70372 Stuttgart (DE)
(72) Erfinder: FRIESEN, Viktor, 76139 Karlsruhe (DE); WEBER, Philipp, 97941 Tauberbischofsheim (DE); MEIDLINGER, Daniel, 73579 Schechingen (DE); KIMMERLE, Christian, 70567 Stuttgart (DE)
(74) Vertreter: Novagraaf Group
(86) Internationale Anmeldenummer: PCT/EP2025/057555
(87) Internationale Veröffentlichungsnummer: WO 2025/242340

(56) Entgegenhaltungen:
- US-A1- 2023 299 979
- US-B2- 9 602 290

## Beschreibung

Die Erfindung betrifft ein Verfahren zur sicheren Ausstattung von Systemen mit einem individuellen Zertifikat, zur sicheren Kommunikation mit wenigstens einem Kommunikationspartner, nach der im Oberbegriff von Anspruch 1 näher definierten Art. Moderne Fahrzeuge zeichnen sich durch eine zunehmende Vernetzung aus. Die Fahrzeuge sind dabei nicht nur mit Systemen wie dem WorldWideWeb verbunden sondern auch mit vom Fahrzeughersteller bzw. OEM betriebenen Systemen und Servern, beispielsweise herstellereigenen Applikationen und einem herstellereigenen Server, welcher häufig auch als Vehicle Backend bezeichnet wird. Diese werden vom Hersteller exklusiv für die eigene Fahrzeugflotte entwickelt, vermarktet und betrieben. All dies zusammen wird auch als Fahrzeug-Ökosystem bezeichnet.

In der Praxis ist es nun so, dass durch die vielfältigen Kommunikationsbeziehungen zwischen den einzelnen Systemkomponenten innerhalb eines solchen Fahrzeug-Ökosystems eine Vielzahl neuer Schnittstellen und Anwendungen entsteht, die allesamt durch geeignete kryptografische Verfahren, wie beispielsweise Mechanismen, Protokolle usw., abgesichert werden müssen. Die Absicherung dient bspw. dazu, die Privatsphäre des Fahrzeugnutzers zu wahren oder dazu, keinen externen Eingriff in den Datenverkehr zu ermöglichen, welcher insbesondere bei der Übertragung von Daten, welche die Fahrzeugsteuerung betreffen, von Angreifern dazu genutzt werden könnte, wichtige Funktionen zu manipulieren.

Dabei ist es offensichtlich, dass die Fahrzeuge an sich nicht mit dem fahrzeugexternen Server bzw. Backend kommunizieren können. Es sind in der Praxis immer einzelne in den Fahrzeugen verbaute Steuergeräte, die eine Verbindung zum Backend herstellen bzw. aufrechterhalten. Aus Sicht des Backends ist es jedoch so, dass es primär ganze Fahrzeuge und keine darin verbaute einzelne Steuergeräte kennt, daher ist es für das Backend wichtiger, sicher zu wissen, in welchem Fahrzeug das Steuergerät, mit dem es gerade kommuniziert, verbaut ist, als zu wissen, um welches Steuergerät es sich genau handelt aber das dazugehörige Fahrzeug nicht zu kennen.

Die Kommunikation zwischen Fahrzeugen und anderen Teilnehmern des Fahrzeug-Ökosystems, insbesondere dem Backend, wird derzeit mit Hilfe von bekannten Standardverfahren abgesichert (meist TLS, manchmal IPSec). Beide Standardverfahren (TLS, IPSec) basieren auf asymmetrischer Kryptographie, insbesondere auf asymmetrischen privaten Schlüsseln und auf für die dazugehörigen öffentlichen Schlüssel von einer zentralen vertrauenswürdigen Zertifizierungsstelle (Certificate Authority (CA)) ausgestellten Zertifikaten. Für eine sichere Kommunikation zwischen den Fahrzeugen und dem Backend sind dabei folgende Anforderungen von Bedeutung:
- die von den Fahrzeugen bzw. ihren Steuergeräten genutzten Zertifikate müssen individuell sein, d.h. jedes Fahrzeug muss mindestens einen eigenen individuellen privaten Schlüssel besitzen, und
- das dazugehörige Zertifikat muss von einer innerhalb des Fahrzeug-Ökosystems vertrauenswürdigen zentralen Zertifizierungsstelle (CA) auf eine individuelle Fahrzeug-Identität ausgestellt sein, bspw. auf die die Fahrzeug-Identifikationsnummer (VIN: Vehicle Identification Number), welche auch als Fahrgestellnummer bezeichnet wird.

Dieser private Schlüssel sollte idealerweise gemeinsam mit dem dazugehörigen öffentlichen Schlüssel in einem sicheren Hardwarebereich (bspw. einem Hardware Sicherheitsmodul/HSM: Hardware Security Module) eines sich in dem Fahrzeug, zu dem das Zertifikat gehören soll, befindenden Steuergerätes erzeugt werden und diesen sicheren Bereich dieses Steuergerätes nie verlassen. Auf diese Weise kann sichergestellt werden, dass der private Schlüssel durch einen Angreifer praktisch nicht ermittelt werden kann.

Eine naheliegende Lösung wäre es, dem Hersteller des Steuergerätes, das den individuellen privaten Schlüssel beherbergen soll, diese Aufgabe zu übertragen, in diesem Steuergerät bei dessen Herstellung ein fahrzeugindividuelles Schlüsselpaar zu erzeugen. Danach könnte man den öffentlichen Schlüssel aus dem Steuergerät auslesen und dafür ein Zertifikat erstellen, wobei der private Schlüssel nicht auslesbar ist und für die gesamte Lebensdauer des Steuergerätes in diesem verbleibt. Diese Vorgehensweise ist jedoch aus zwei Gründen problematisch.

Erstens ist die Identität des Fahrzeugs, für das das Zertifikat ausgestellt werden soll, zum Zeitpunkt der Herstellung des Steuergerätes noch nicht bekannt, da es zu diesem Zeitpunkt nicht bekannt ist, in welchem Fahrzeug, d.h. im Fahrzeug mit welcher Identität, das Steuergerät später beim OEM verbaut werden wird. Zweitens wird das Steuergerät in der Regel von einem anderen Unternehmen als dem OEM hergestellt. Die fahrzeugindividuellen Zertifikate für die Absicherung der Kommunikation zwischen den Fahrzeugen und dem OEM-eigenen Backend bzw. anderen Teilnehmern des OEM-eigenen Fahrzeug-Ökosystems sollten jedoch vom OEM selbst und nicht vom Steuergerätehersteller ausgestellt werden, u. a. um eine potentielle missbräuchliche Ausstellung von Zertifikaten durch den Steuergerätehersteller auszuschließen. Theoretisch ist es zwar möglich, eine OEM-eigene Zertifizierungsstelle (CA) an die Fertigungslinien des Steuergeräteherstellers sicher anzubinden, dieses ist jedoch eine kostenintensive Lösung.

Die Offenlegungsschrift DE 10 2009 009 310 A1 der Anmelderin stellt ein Verfahren bereit, mittels dem die sichere Kommunikation zwischen einem Benutzergerät mit einem Steuergerät eines Fahrzeugs und einem davon entfernt gelegenen Backend über ein öffentlich zugängliches Netz unter Verwendung digitaler Zertifikate möglich ist. Das Verfahren umfasst dabei die die Schritte des Erzeugens eines unspezifischen Zertifikats durch das Backend und des Sendens des unspezifischen Zertifikats an das Steuergerät, ferner das Empfangen und Speichern des unspezifischen Zertifikats im Steuergerät und das anschließende Herstellen einer Initialverbindung des Steuergeräts mit dem Backend unter Benutzung des unspezifischen Zertifikates als Identifizierer. Die Initialverbindung wird vom Backend nur angenommen, wenn der Identifizierer das unspezifische Zertifikat ist. Schließlich wird vom Backend eine Identifizierungsinformation des Fahrzeugs angefordert und von dem Steuergerät an das Backend zurückgesendet. Das Backend erzeugt dann ein spezifisches Zertifikats mit Hilfe der Identifizierungsinformation und sendet dieses an das Steuergerät. Dort wird es empfangen und gespeichert. Im Anschluss kann eine kryptographisch abgesicherte Arbeitsverbindung aufgebaut werden.

Das in DE 10 2009 009 310 A1 vorgestellte Verfahren hat dabei einige prinzipbedingte Nachteile. Zum einen wird von der Zertifizierungsstelle nicht nur das individuelle Fahrzeugzertifikat generiert sondern auch das fahrzeugindividuelle Schlüsselpaar, für das das Zertifikat ausgestellt wird. Dies umfasst insbesondere auch den fahrzeugindividuellen privaten Schlüssel. Damit liegt der fahrzeugindividuelle private Schlüssel zum einen nicht nur dem Steuergerät bzw. Fahrzeug, von dem er genutzt werden soll, vor, sondern ist zumindest auch noch der ihn erzeugenden Zertifizierungsstelle bekannt. Zum anderen muss dieser Schlüssel samt des Zertifikats von der ausstellenden Zertifizierungsstelle über eine relativ unsichere Verbindung zum Fahrzeug übertragen werden. Dies liegt daran, dass das Fahrzeug zu diesem Zeitpunkt noch über kein sicheres individuelles Zertifikat verfügt. Ferner kann sich die Zertifizierungsstelle nie sicher sein, dass sie das neu erstellte fahrzeugindividuelle Zertifikat, und insbesondere den schützenswerten individuellen privaten Schlüssel, auch wirklich an das Fahrzeug mit der richtigen Identität überträgt. Vielmehr könnte auch ein unberechtigter Dritter, der diese Identität lediglich vortäuscht, der Anforderer bzw. Empfänger des Zertifikats sein, da wegen des noch nicht vorliegenden fahrzeugindividuellen Zertifikats, zu diesem Zeitpunkt der Anforderer bzw. Empfänger noch nicht sicher authentifiziert wird.

Die Offenlegungsschrift DE10 2020 004 832 A1 beschreibt eine stark verbesserte Modifikation des in der DE 10 2009 009 310 A1 beschriebenen Verfahrens, welche dessen zuvor beschriebenen prinzipiellen Schwächen zumindest abmildert. Diese Verbesserungen sind heute aus zwei Gründen sinnvoll möglich und praktikabel. Zum einen ist es heute gängige Praxis, dass in Fahrzeugen mehrere Steuergeräte, die mit einem Hardware Security Module (HSM) ausgestattet sind, verbaut werden. Zum anderen ist es den Geräteherstellern heute möglich, diese Steuergeräte im Rahmen des Herstellungsprozesses effizient und auf eine sichere Art und Weise nicht nur mit geteilten sondern auch mit individuellen Geheimnissen bzw. Schlüsseln auszustatten. Insbesondere können Steuergeräte mit sogenanntem Endorsement-Schlüsselmaterial, insbesondere auch einem individuellen asymmetrischen Schlüsselpaar oder auch einem privaten Schlüssel und einem den dazugehörigen öffentlichen Schlüssel enthaltenden Zertifikat, ausgestattet werden.

Wie oben bereits erwähnt, kann zum Zeitpunkt der Herstellung des Steuergerätes, das das fahrzeugindividuelle Zertifikat beherbergen soll, kein Zertifikat für eine Fahrzeug-Identität ausgestellt werden, da diese noch nicht bekannt ist. In der DE 10 2020 004 832 A1 wird vorgeschlagen, ein Zertifikat für eine individuelle Steuergeräte-Identität auszustellen, bspw. für eine eindeutige und fälschungssichere, bspw. schreibgeschützte, Identität des Steuergerätes, das bspw. das HSM verbaut hat, in dem später der zum fahrzeugindividuellen Zertifikat gehörende private Schlüssel sicher abgelegt sein soll.

Darüber hinaus wird vorgeschlagen, dem steuergeräteindividuellen Zertifikat den

Steuergerätetyp hinzuzufügen, zu dem dieses Steuergerät gehört (bspw. Head Unit (HU), Telematic Communication Unit (TCU), Rear Seat Unit (RSU) etc.), sofern dieser Typ aus der Steuergeräteidentität nicht abgeleitet werden kann, bspw. indem der Steuergerätetyp in einem Erweiterungsfeld des Zertifikats ("Certificate Extension") abgelegt wird. Auf diese Weise wird es ermöglicht, dass mehrere im gleichen Fahrzeug verbaute Steuergeräte ein eigenes fahrzeugindividuelles Zertifikat ausgestellt bekommen können und diese verschiedenen fahrzeugindividuellen Zertifikate von der Gegenseite bei Bedarf auseinandergehalten werden können.

Der geräteindividuelle private Schlüssel und das geräteindividuelle Zertifikat werden dann vom Steuergerät zur Laufzeit dazu genutzt, einen in diesem Steuergerät zur Laufzeit erzeugten den als Teil eines fahrzeugindividuellen Schlüsselpaares vom Steuergerät erzeugten fahrzeugindividuellen öffentlichen Schlüssel enthaltenden Certificate Signing Request (CSR) auf eine manipulationssichere Weise an die Fahrzeug-Zertifizierungsstelle zu übermitteln und daraufhin von dieser ein fahrzeugindividuelles Zertifikat zu erhalten, wobei der fahrzeugindividuelle private Schlüssel dieses Gerät nie verlässt.

Das beschriebene Verfahren verlangt dabei, dass der öffentliche Schlüssel der Fahrzeug-Zertifizierungsstelle im Steuergerät manipulationssicher abgelegt wird, und dass das Steuergerät das empfangene fahrzeugindividuelle Zertifikat überprüft, indem zumindest die Korrektheit der Signatur des fahrzeugindividuellen Zertifikats mit dem öffentlichen Schlüssel der Fahrzeug-Zertifizierungsstelle überprüft wird. Dabei gilt das fahrzeugindividuelle Zertifikat an sich als integritätsgeschützt, da die im Zertifikat enthaltene von der Fahrzeug-Zertifizierungsstelle erzeugte digitale Signatur jederzeit mit Hilfe des öffentlichen Schlüssels der Fahrzeug-Zertifizierungsstelle überprüft werden kann und damit jede Manipulation am Zertifikat festgestellt werden kann. Aus diesem Grunde ist ein weiterer Integritätsschutz des Zertifikats nicht notwendig.

Auf diese Weise bildet nun der öffentliche Schlüssel der Fahrzeug-Zertifizierungsstelle einen (verhältnismäßig unflexiblen) Security-Anker bzw. Vertrauensanker im Steuergerät, was zur Folge hat, dass der öffentliche Schlüssel der Fahrzeug-Zertifizierungsstelle im Steuergerät manipulationssicher abgelegt werden muss, was wiederum zur Folge hat, dass der öffentliche Schlüssel der Fahrzeug-Zertifizierungsstelle in einem Steuergerät nicht ohne Weiteres sicher gegen einen anderen öffentlichen Schlüssel ausgetauscht werden kann, was jedoch im Falle eines Schlüsseltausches in der Fahrzeug-Zertifizierungsstelle notwendig wäre. Die verhältnismäßig unflexible manipulationssichere Ablage des öffentlichen Schlüssels der Fahrzeug-Zertifizierungsstelle im Steuergerät und dessen Nutzung zur Überprüfung der empfangenen fahrzeugindividuellen Zertifikate führen also dazu, dass die Fahrzeug-Zertifizierungsstelle, und hier insbesondere deren Schlüsselpaar nach der manipulationssicheren Ablage des öffentlichen Schlüssels in einem Steuergerät nicht ohne Weiteres getauscht bzw. verändert werden können.

Da die Lebensdauer der Fahrzeuge jedoch mehrere Jahrzehnte betragen kann, kann es in dieser Zeit, bspw. aus Security-Sicht, vorteilhaft bzw. sogar notwendig werden, für das Signieren von fahrzeugindividuellen Zertifikaten ein anderes asymmetrisches Schlüsselpaar und damit eine andere Fahrzeug-Zertifizierungsstelle zu verwenden. Bspw. kann es von bestimmten Behörden, bspw. dem Bundesamt für Sicherheit in der Informationstechnik (BSI), empfohlen sein, ab einem bestimmten Zeitpunkt ein bestimmtes kryptographisches Verfahren oder eine bestimmte Schlüssellänge nicht mehr zu verwenden. Ein Umstieg auf ein neues Schlüsselpaar bei der Fahrzeug-Zertifizierungsstelle kann auch notwendig sein, weil bspw. das ursprünglich genutzte Signierverfahren und/oder die ursprünglich genutzte Schlüssellänge nicht mehr dem Stand der Technik entsprechen und allgemein als nicht sicher genug angesehen werden.

Wegen der oben beschriebenen Hürden beim Austausch des öffentlichen Schlüssels der Fahrzeug-Zertifizierungsstelle in bereits produzierten Fahrzeugen und der Nutzung des öffentlichen Schlüsseln der Fahrzeug-Zertifizierungsstelle durch die Steuergeräte zur Prüfung der empfangenen fahrzeugindividuellen Zertifikate ist eine Umstellung der sich bereits im Feld befindenden Fahrzeuge bzw. Steuergeräte auf ein anderes Schlüsselpaar und damit letztlich auf eine andere Fahrzeug-Zertifizierungsstelle nicht ohne weiteres möglich, denn die Prüfung einer mit neuem privatem Schlüssel erstellten Signatur mit dem im Steuergerät abgelegten alten öffentlichen Schlüssel würde zwangsweise fehlschlagen und das empfangene mit dem neuen privaten Schlüssel signierte Zertifikat würde verworfen werden.

Damit wären die sich im Feld befindenden Fahrzeuge dauerhaft an die ursprüngliche Fahrzeug-Zertifizierungsstelle gebunden, ein Umstieg auf eine andere Fahrzeug-Zertifizierungsstelle wäre nicht ohne entsprechenden Aufwand möglich. Das wiederum führt dazu, dass die sich im Feld befindenden Fahrzeuge mit der Zeit vermehrt mit fahrzeugindividuellen Zertifikaten ausgestattet werden würden, die mit veralteten nicht dem Stand der Technik entsprechenden Signierverfahren und/oder zu kurzen privaten Schlüsseln signiert worden wären. Darüber hinaus müssten so im Laufe der Zeit immer mehr verschiedene Fahrzeug-Zertifizierungsstellen betrieben werden, was zu einem erheblichen Mehraufwand führen würde.

Die genannten Nachteile beschränken sich dabei generell nicht nur auf Fahrzeuge bzw. deren Steuergeräte sondern gelten ganz allgemeine auch für alle anderen hinsichtlich einer sicheren Kommunikation vergleichbaren Ökosysteme mit Systemen einerseits und deren wenigstens einem Kommunikationspartner andererseits.

Weiterhin wird in der DE 10 2020 205 933 A1 ein Verfahren zur Kopplung eines Authentifizierungsmittels mit einem Fahrzeug offenbart. Hierfür kommuniziert ein Authentifizierungsmittel mit einem Steuergerät eines Fahrzeugs zur Erlangung einer Berechtigung, wobei zumindest eine Kopplung vorgesehen ist, sobald das Authentifizierungsmittel mittels einer Authentifizierungsinformation, etwa einem Passwort, dem Steuergerät als berechtigt ausgewiesen wird. Dabei ist die Authentifizierungsinformation für eine erstmalige Kopplung durch einen Server oder ein Backend generierbar. Die erstmalige Kopplung wird durch eine im Fahrzeug angeordnete Bedieneinheit initiiert. Die Authentifizierungsinformation wird vorzugsweise verschlüsselt an das Authentifizierungsmittel gesendet, wobei die Authentifizierungsinformation vom Authentifizierungsmittel vorzugsweise verschlüsselt an das Steuergerät gesendet wird.

Einen gattungsgemäßen Stand der Technik beschreibt die US 2023 / 299 979 A.

Zum weiteren Stand der Technik kann außerdem auf die US 9,602,290 B2 verwiesen werden.

Die Aufgabe der hier vorliegenden Erfindung besteht deshalb darin, ein verbessertes Verfahren zur sicheren Ausstattung eines Systems mit einem individuellen Zertifikat gemäß dem Oberbegriff von Anspruch 1 anzugeben, dass deren längerfristige Nutzung flexibler und sicherer macht.

Erfindungsgemäß wird diese Aufgabe durch ein Verfahren mit den Merkmalen im Anspruch 1 und hier insbesondere im kennzeichnenden Teil des Anspruchs 1 gelöst. Weitere vorteilhafte Ausgestaltungen und Weiterbildungen des Verfahrens sind in den hiervon abhängigen Unteransprüchen angegeben.

Bei dem erfindungsgemäßen Verfahren wird vorgeschlagen, bei der Ausstellung von individuellen Zertifikaten für eine Menge von Systemen durch eine mit einem asymmetrischen Schlüsselpaar (CARootPub, CARootPriv) ausgestattete Zertifizierungsstelle (CA) diese Zertifizierungsstelle (CA) um eine mit einem von (CARootPub, CARootPriv) unterschiedlichen asymmetrischen Schlüsselpaar (ACSAPub, ACSAPriv) ausgestattete sogenannte zusätzliche Zertifikat-Signierstelle (ACSA - Additional Certificate Signing Authority) zu ergänzen, alle Systeme, die von der Zertifizierungsstelle (CA) ausgestellte Zertifikate (Cert) von dieser anfordern und empfangen wollen, mit dem öffentlichen Schlüssel (ACSAPub) der zusätzlichen Zertifikat-Signierstelle (ACSA) auszustatten. Dabei geht es hier um die Ausstattung mit Zertifikaten, und nicht um deren Nutzung zur Absicherung der Kommunikation. Bei der Ausstattung werden sie bei der Zertifizierungsstelle (CA) angefordert und anschließend im Zuge der Übermittlung eines von der Zertifizierungsstelle (CA) ausgestellten Zertifikats (Cert) von dieser an das das Zertifikat anfordernde System dieses Zertifikat, samt der Signatur, von der zusätzlichen Zertifikat-Signierstelle (ACSA) mit ihrem privaten Schlüssel (ACSAPriv) zu signieren und die auf diese Weise erzeugte Signatur (CertSign) an das das Zertifikat anfordernde System zusammen mit dem erzeugten Zertifikat (Cert) zu übermitteln, anschließend die Korrektheit des empfangenen Zertifikats (Cert) und der empfangenen Signatur (CertSign) von dem das Zertifikat (Cert) anfordernden System mit Hilfe des dort zuvor abgelegten öffentlichen Schlüssels (ACSAPub) der zusätzlichen Zertifikat-Signierstelle (ACSA) zu prüfen, wobei auf die Prüfung der im Zertifikat (Cert) enthaltenen Signatur mit dem öffentlichen Schlüssel (CARootPub) der Zertifizierungsstelle (CA) verzichtet wird, und im Falle des Fehlschlagens dieser Prüfung eine Ausnahmebehandlung einzuleiten.

Auch wenn der Vorteil auf den ersten Blick ggf. nicht sofort zu erkennen ist, bietet das hier beschriebene Verfahren entscheidende Vorteile gegenüber dem Stand der Technik, insbesondere gegenüber der DE 10 2020 004 832 A1. Der Erfinder hat nämlich erkannt, dass die Prüfung der empfangenen Zertifikate (Cert) durch das empfangende System nicht in dem Maße notwendig ist, wie es scheint. Denn aus Security-Sicht muss das empfangende System weder der Zertifizierungsstelle (CA) bzw. ihrem öffentlichen Schlüssel (CARootPub) vertrauen noch muss es das empfangene Zertifikat (Cert) aus Security-Sicht prüfen. Vielmehr muss der Kommunikationspartner, mit dem das Steuergerät anschließend mit Hilfe des empfangenen Zertifikats (Cert) abgesichert kommuniziert, sowohl der das (Cert) ausstellenden Zertifizierungsstelle (CA) und damit ihrem öffentlichen Schlüssel (CARootPub) vertrauen, als auch die Integrität des zuvor vom System empfangenen und anschließend von diesem an seinen Kommunikationspartner zwecks Absicherung der Kommunikation weitergeleiteten Zertifikats (Cert) mit Hilfe des öffentlichen Schlüssels (CARootPub) der Zertifizierungsstelle (CA) prüfen.

Somit kann aus Security-Sicht, zumindest hinsichtlich der Vertraulichkeit und der Integrität, auf die Prüfung der Signatur des empfangenen Zertifikats (Cert) mit Hilfe des öffentlichen Schlüssels (CARootPub) der Zertifizierungsstelle (CA) durch das System und damit auf die in DE 10 2020 004 832 A1 beschriebene (manipulationssichere) Ablage des öffentlichen Schlüssels (CARootPub) in dem System verzichtet werden.

Bei dem erfindungsgemäßen Verfahren erfolgt stattdessen nun eine "doppelte Signierung" des Zertifikatsinhalts, einmal die Signierung des Zertifikatsrumpfes mit dem privaten Schlüssel der Zertifizierungsstelle und einmal die Signierung des kompletten Zertifikats mit dem privaten Schlüssel der zusätzlichen Zertifikat-Signierstelle. Dadurch können für die Prüfung des Zertifikats durch das anfordernde/empfangende System und für die Prüfung des Zertifikats durch den Kommunikationspartner verschiedene Signierverfahren und/oder verschiedene öffentliche Schlüssel verwendet werden, die dann jeweils zu verschiedenen Zeitpunkten, je nach Bedarf des jeweiligen Signierverfahrens und/oder je nach den jeweiligen Sicherheitszielen, unabhängig voneinander geändert bzw. ausgetauscht werden können. Dadurch kann die Zertifizierungsstelle in Abstimmung mit den Kommunikationspartnern der Systeme für die Zertifikatsausstellung mit geringem Aufwand immer die sichersten dem Stand der Technik entsprechenden Signierverfahren und Schlüssellängen nutzen, während das System weiterhin die alten Verfahren bzw. Schlüssel für die Überprüfung des empfangenen Zertifikats nutzen kann.

Wie oben ausgeführt, ist es ja aus Security-Sicht nicht nötig, dass das empfangende System der Zertifizierungsstelle (CA) bzw. ihrem öffentlichen Schlüssel (CARootPub) vertraut, noch muss es das empfangene Zertifikat (Cert) aus Security-Sicht prüfen. Lediglich der Kommunikationspartner des Systems muss der Zertifizierungsstelle (CA) und damit ihrem öffentlichen Schlüssel (CARootPub) vertrauen und die Integrität des zuvor vom System empfangenen und anschließend von diesem an den Kommunikationspartner weitergeleiteten Zertifikats (Cert) mit Hilfe des öffentlichen Schlüssels (CARootPub) prüfen.

Durch die fehlende Prüfung in dem System erhöht sich nun prinzipiell das Risiko, dass ein System ein nicht-korrektes Zertifikat akzeptiert bzw. hinterlegt, bspw. falls ihm ein nicht-korrektes Zertifikat zugesendet wird, wobei sowohl eine gezielte Manipulation durch einen Angreifer als auch ein technischer Fehler oder menschliches Versagen der Grund für die Zusendung eines nicht-korrekten Zertifikats sein können. Ist in dem System deshalb ein nicht-korrektes Zertifikat hinterlegt, kann die Verfügbarkeit des Systems in der Kommunikation beeinträchtigt sein, da Partner, mit denen abgesichert kommuniziert werden soll, wegen des nicht-korrekten Zertifikats potentiell nicht erreichbar sind, weil sie ein nicht-korrektes Zertifikat nicht akzeptieren und damit die Identität des Systems nicht anerkennen.

Dabei benötigt der Kommunikationspartner des Systems die höchstmögliche Sicherheit, dass es sich bei dem ihm vorliegenden Zertifikat tatsächlich um das Zertifikat des Systems, mit dem er gerade kommuniziert, handelt. Sollte dies nicht der Fall sein, so ist die Sicherheit des Kommunikationspartners gefährdet, weil er ggf. einer falschen Stelle vertraut. Dagegen ist das mit einem nicht-korrekten Zertifikat zusammenhängende Risiko für das System selbst wesentlich geringer. Das Risiko des Systems besteht lediglich darin, dass, falls es ein nicht-korrektes Zertifikat erhält und dieses verwendet, seine Verfügbarkeit eingeschränkt sein könnte, weil sein Kommunikationspartner das Zertifikat nicht anerkennt und damit keine abgesicherte Kommunikation mit dem Kommunikationspartner aufgebaut werden kann. Die Vertraulichkeit und die Integrität der Daten des Systems, was meist ein erheblich höheres Sicherheitsziel darstellt, bleiben hiervon jedoch unberührt. Es genügt dem System also, wenn es der zusätzlichen Zertifikat-Signierstelle (ACSA) vertraut, welche ihm durch die Signatur bestätigt, dass es sich bei dem empfangenen Zertifikat ihrer Sicht nach um ein korrektes und für dieses System geeignetes Zertifikat handelt.

Schafft es ein Angreifer, diesen zusätzlichen Schutz zu umgehen, indem bspw. das Zertifikat und die zusätzliche Signatur erfolgreich manipuliert werden, ist der entstandene Schaden für beide Seiten (System, Kommunikationspartner) begrenzt, da der Kommunikationspartner die Zertifikatsänderung leicht anhand der Überprüfung der im Zertifikat enthaltenen von der Zertifizierungsstelle (CA) erzeugten Signatur erkennen würde. Damit kann in Kauf genommen werden, dass das zum zusätzlichen Signieren verwendete Verfahren sowie der dabei verwendete private Schlüssel und damit der zum Prüfen der zusätzlichen Signatur verwendete öffentliche Schlüssel mit der Zeit ggf. nicht mehr in vollem Umfang dem Stand der Technik entsprechen, damit können sie über einen längeren Zeitraum, ggf. sogar über die gesamte Lebensdauer eines mit dem System ausgestatteten Produkts, wie z.B. eines Fahrzeugs, unverändert bleiben, wodurch insb. eine manipulationssichere Ablage des für die Prüfung der zusätzlichen Signatur verwendeten öffentlichen Schlüssels im System erleichtert wird.

Man beachte, dass es wichtig ist, dass die im Zertifikat enthaltene von der Zertifizierungsstelle (CA) erzeugte Signatur beim zusätzlichen Signieren mitsigniert wird. Würde stattdessen nur der Rumpf des Zertifikats zusätzlich signiert, nicht jedoch die von der Zertifizierungsstelle (CA) erzeugte Signatur, so kann das System durch die Überprüfung der zusätzlichen Signatur nicht feststellen, ob die von der Zertifizierungsstelle (CA) erzeugte Signatur des empfangenen Zertifikats die Originalsignatur der Zertifizierungsstelle (CA) ist, die zusätzliche Signatur würde damit ihren Zweck verfehlen, da ein Angreifer durch eine Manipulation der im Zertifikat enthaltenen Signatur die Verfügbarkeit des Systems im oben beschriebenen Sinne leicht beinträchtigen könnte. Aus diesem Grund eignen sich die aus der Literatur bekannten Cross-Zertifikate, bei denen für einen in einem Zertifikat enthaltenen öffentlichen Schlüssel von weiteren Zertifizierungsstellen weitere Zertifikate ausgestellt werden, nicht für das erfindungsgemäße Verfahren, da bei der Cross-Zertifizierung die von der ersten Zertifizierungsstelle erzeugten Signaturen von den weiteren Zertifizierungsstellen nicht erneut signiert werden. Analog verhält es sich mit Zertifikaten mit multiplen Signaturen, bei denen ein Zertifikat Signaturen mehrerer Zertifizierungsstellen enthalten kann, die jeweils denselben Zertifikatsrumpf nicht jedoch die Signaturen der anderen Zertifizierungsstellen signieren.

Damit ist aufgezeigt worden, dass es sinnvoll ist, das ausgestellte Zertifikat ein zusätzliches Mal zu signieren und im anfordernden System auf eine Prüfung der von der Zertifizierungsstelle erzeugten im Zertifikat enthaltenen Signatur zu verzichten und stattdessen nur die Korrektheit der zusätzlichen Signatur zu prüfen.

Nichtdestotrotz kann es sinnvoll sein, das empfangene Zertifikat vom anfordernden/empfangenden System dahingehend zu prüfen, ob bestimmte im dem ausgestellten Zertifikat zugrundeliegenden Certificate Signing Request (CSR) enthaltenen Daten mit den entsprechenden Daten im empfangenen Zertifikat (Cert) übereinstimmen, bspw. ob der im Zertifikat enthaltene öffentliche Schlüssel gleich dem im Certificate Signing Request (CSR) enthaltenen öffentlichen Schlüssel ist und/oder, ob, im Falle von X.509-Zertifikaten, der im Certificate Signing Request (CSR) enthaltenen CommonName (CN) mit dem im Zertifikat enthaltenen CommonName (CN) übereinstimmt. Gemäß einer sehr günstigen Ausgestaltung des erfindungsgemäßen Verfahrens ist es daher vorgesehen, für zumindest ein im Certificate Signing Request (CSR) enthaltenes Datenfeld vom das Zertifikat (Cert) anfordernden/empfangenden System zu prüfen, ob der Wert dieses Datenfeldes in dem an die Zertifizierungsstelle (CA) übermittelten Certificate Signing Request (CSR) mit dem Wert dieses Datenfeldes im empfangenen Zertifikat (Cert) auf geeignete Weise übereinstimmt.

Als zusätzliche Zertifikat-Signierstelle (ACSA) kann jede aus Sicht der die Zertifikate anfordernden/empfangenden Systeme vertrauenswürdige Instanz agieren, die bei der Übermittlung der Zertifikate von der Zertifizierungsstelle (CA) an die anfordernden Systeme von den Zertifikaten passiert wird, insb. kann es die Zertifizierungsstelle (CA) oder eine Registrierungsstelle (RA), falls eine Registrierungsstelle (RA) genutzt wird und an der Verteilung der Zertifikate beteiligt ist, sein. Eine solche Registrierungsstelle (RA) könnte im Fahrzeugkontext beispielsweise ein Backend des Fahrzeugherstellers sein oder durch ein solches ausgebildet werden.

Es wird gemäß einer vorteilhaften Weiterbildung daher vorgeschlagen, als zusätzliche Zertifikat-Signierstelle (ACSA) die Zertifizierungsstelle (CA) oder die Registrierungsstelle (RA) zu verwenden.

Damit das zusätzliche Signieren seinen Zweck erfüllt, muss das das Zertifikat empfangende System der zusätzlichen Zertifikat-Signierstelle (ACSA) vertrauen, das bedeutet insbesondere, dass die zusätzliche Zertifikat-Signierstelle (ACSA) eine Kenntnis darüber haben muss oder diese Kenntnis durch geeignete Überprüfungen herstellen können muss, ob das zu übermittelnde Zertifikat im Sinne der Anforderung des empfangenden Systems korrekt ist. Es kann also sinnvoll sein, die zusätzliche Zertifikat-Signierstelle (ACSA) so auszulegen, dass sie dazu in der Lage ist.

Eine besonders vorteilhafte Weiterbildung des Verfahrens gemäß der Erfindung sieht es daher vor, die zusätzliche Zertifikat-Signierstelle (ACSA) so umzusetzen, dass sie in der Lage ist, festzustellen, ob das an das anfordernde/empfangende System weiterzuleitende Zertifikat (Cert) den Anforderungen dieses Systems genügt, indem bspw. die zusätzliche Zertifikat-Signierstelle (ACSA) (einmalig) mit dem öffentlichen Schlüssel (CARootPub) der Zertifizierungsstelle (CA) ausgestattet wird und die Korrektheit der Signatur eines zusätzlich zu signierenden Zertifikats (Cert) von der zusätzlichen Zertifikat-Signierstelle (ACSA) vor der Berechnung der zusätzlichen Signatur (CertSign) überprüft wird und/oder für jedes zu signierende Zertifikat (Cert) der zusätzlichen Zertifikat-Signierstelle (ACSA) der der Zertifikatsaustellung zugrundeliegende Certificate Signing Request (CSR) auf eine Weise bekanntgemacht wird, die eine sichere Zuordnung des Certificate Signing Request (CSR) zu dem zu signierenden Zertifikat (Cert) erlaubt, indem bspw. der Certificate Signing Request (CSR) von der Registrierungsstelle (RA) oder von der Zertifizierungsstelle (CA) geeignet abgesichert an die zusätzliche Zertifikat-Signierstelle (ACSA) übermittelt wird und anschließend von der zusätzlichen Zertifikat-Signierstelle (ACSA) zu überprüfen, ob das zu signierende Zertifikat (Cert) dem Certificate Signing Request (CSR) auf geeignete Weise entspricht.

Da die Zertifizierungsstelle (CA) sowohl den CSR als auch den eigenen öffentlichen Schlüssel (CARootPub) naturgemäß kennt, kann es, wie oben bereits vorgeschlagen, besonders vorteilhaft sein, die zusätzliche Zertifikat-Signierstelle (ACSA) als Teil der Zertifizierungsstelle (CA) zu implementieren. Ähnliche Vorteile ergeben sich bei der Implementierung der zusätzlichen Zertifikat-Signierstelle (ACSA) als Teil der der Registrierungsstelle (RA) - sofern vorhanden -, da die Registrierungsstelle (RA) den CSR ebenfalls naturgemäß immer kennt und der öffentliche Schlüssel (CARootPub) der Zertifizierungsstelle (CA) leicht einmalig integritätsgeschützt an die Registrierungsstelle (RA) übermittelt werden kann.

Das erfindungsgemäße Verfahren kann nun bevorzugt in einem Fahrzeug-Ökosystem zum Einsatz kommen, so dass die Zertifizierungsstelle (CA) als Fahrzeug-Zertifizierungsstelle (FCA) ausgebildet ist und die Systeme die Steuergeräte in dem Fahrzeug ausbilden.

Weitere vorteilhafte Ausgestaltungen des erfindungsgemäßen Verfahrens ergeben sich auch aus den restlichen abhängigen Unteransprüchen und werden anhand der Ausführungsbeispiele deutlich, welche nachfolgenden unter Bezugnahme auf die Figuren näher beschrieben werden.

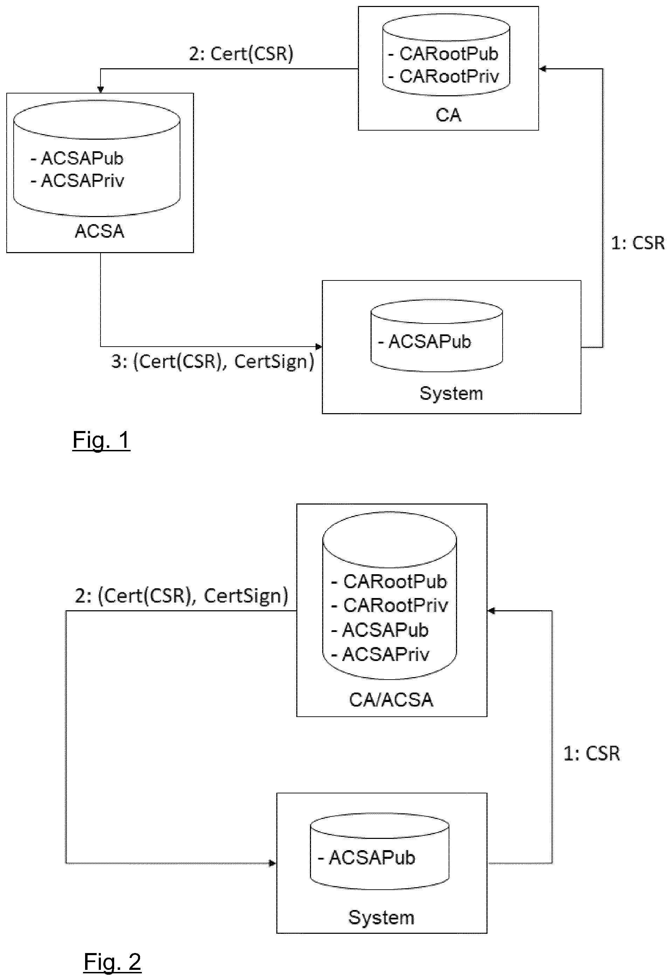

Dabei zeigen:
- Fig. 1: eine Abbildung eines Schemas zur Erläuterung der Kernidee des erfindungsgemäßen Verfahrens;
- Fig. 2: die schematische Darstellung einer in eine Zertifizierungsstelle integrierten zusätzliche Zertifikat-Signierstelle;
- Fig. 3: die schematische Darstellung einer in eine Registrierungsstelle integrierten zusätzlichen Zertifikat-Signierstelle;
- Fig. 4: eine Abbildung eines Schemas analog zur Darstellung in Figur 1, bei welchem ergänzend eine Registrierungsstelle vorgesehen ist;
- Fig. 5: eine Abbildung eines Schemas analog zur Darstellung in Figur 4 in einem Fahrzeug-Ökosystem; und
- Fig. 6: eine Abbildung eines Schemas zur detaillierten Erläuterung des erfindungsgemäßen Verfahrens in einem Fahrzeug-Ökosystem.
Die Darstellung in Figur 1 zeigt ein Schema zur Erläuterung der Kernidee des erfindungsgemäßen Verfahrens. Dieses umfasst das System , die zusätzliche Zertifikat-Signierstelle ACSA und die Zertifizierungsstelle CA. Im System ist der öffentliche Schlüssel ACSAPub der zusätzlichen Zertifikat-Signierstelle ACSA gespeichert, die zusätzliche Zertifikat-Signierstelle ACSA verfügt prinzipbedingt über ihr Schlüsselpaar ASCAPub und ASCAPriv. Die Zertifizierungsstelle CA verfügt über ihr Schlüsselpaar CARootPub und CARootPriv. In einem ersten Schritt wird nun eine Zertifikat-Signieranforderung, ein sogenannter Certificate Signing Request CSR, von dem System an die Zertifizierungsstelle CA übermittelt. Diese erstellt ein dem Certificate Signing Request CSR entsprechendes Zertifikat Cert(CSR) und übermittelt dieses an die zusätzliche Zertifikat-Signierstelle ACSA. Diese signiert das komplette Zertifikat mit ihrem privaten Schlüssel ASCAPriv und übermittelt die Signatur CertSign und das Zertifikat Cert zusammen an das System. Dort reicht es nun aus, die durch die zusätzliche Zertifikat-Signierstelle ACSA erstellte Signatur CertSign des Zertifikats mit dem dort abgelegten öffentlichen Schlüssel ACSAPub der zusätzlichen Zertifikat-Signierstelle ACSA zu prüfen, um eine ausreichende Sicherheit zu gewährleiten.

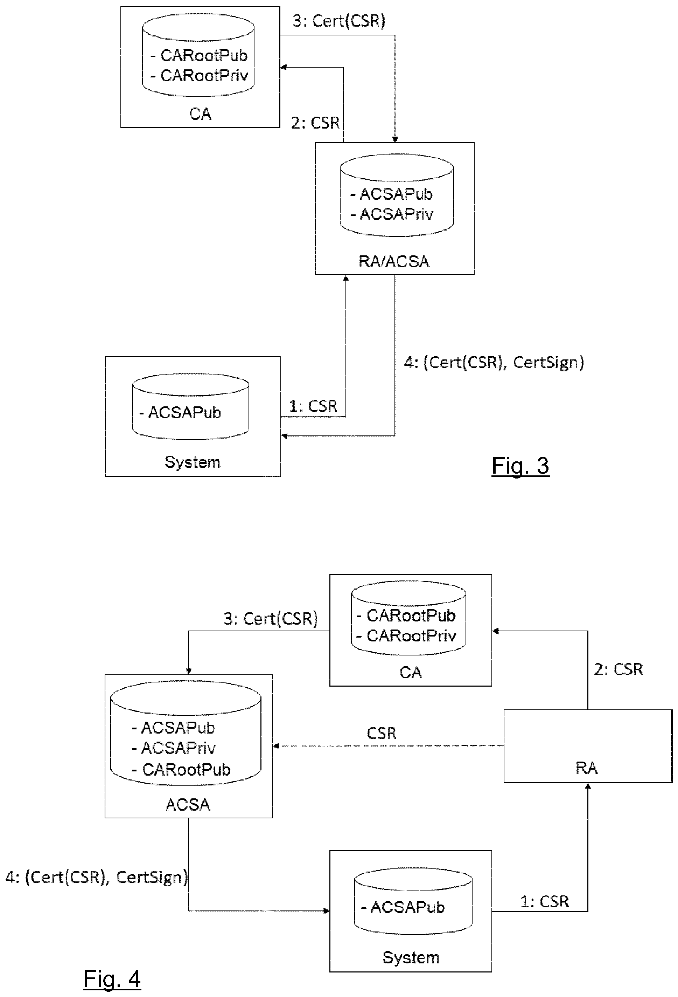

Die zusätzliche Zertifikat-Signierstelle ACSA kann nun auch als Teil der Zertifizierungsstelle CA ausgebildet sein, wodurch ein (externer) Schritt entfallen kann, wie es in Figur 2 dargestellt ist. Alternativ dazu kann auch eine Registrierungsstelle RA mit aufgesetzt werden, welche im Fahrzeugkontext beispielsweise ein Backend des Fahrzeugherstellers sein oder durch ein solches ausgebildet werden kann. Wie es in Figur 3 zu erkennen ist, empfängt diese Registrierungsstelle RA als der (primäre) Kommunikationspartner des Systems dessen Certificate Signing Request CSR und gibt diesen an die Zertifizierungsstelle CA weiter. Ansonsten ist der Ablauf des Verfahrens dem der Figur 1 vergleichbar.

Figur 4 zeigt nun eine unabhängig von der Registrierungsstelle RA und der Zertifizierungsstelle CA dargestellte zusätzliche Zertifikat-Signierstelle ACSA, welche jedoch auch analog zu den Figuren 2 oder 3 integriert ausgebildet sein könnte und dies typischerweise auch sein wird. Für die Erläuterung ist die getrennte Darstellung hier jedoch anschaulicher. Damit das zusätzliche Signieren seinen Zweck erfüllt, muss das das Zertifikat Cert empfangende System der zusätzlichen Zertifikat-Signierstelle ACSA vertrauen, das bedeutet insbesondere, dass die zusätzliche Zertifikat-Signierstelle ACSA eine Kenntnis darüber haben muss oder diese Kenntnis durch geeignete Überprüfungen herstellen können muss, ob das zu signierende und zu übermittelnde Zertifikat Cert im Sinne der Anforderung des empfangenden Systems korrekt ist. Dafür ist sie nun mit dem öffentlichen Schlüssel CARootPub der Zertifizierungsstelle CA ausgestattet, außerdem wird an sie von der Registrierungsstelle RA der der Ausstellung des Zertifikats Cert zugrundeliegende Certificate Signing Request CSR übermittelt. Sie kann also die durch die Zertifizierungsstelle CA erstellte Signatur des Zertifikats Cert überprüfen, außerdem kann sie überprüfen, ob das von der Zertifizierungsstelle CA ausgestellte Zertifikat Cert dem Certificate Signing Reuest CSR entspricht.

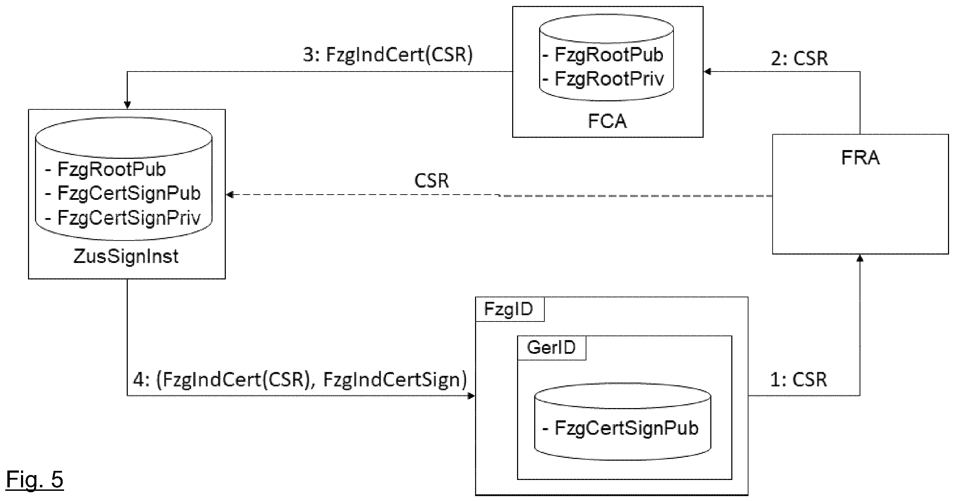

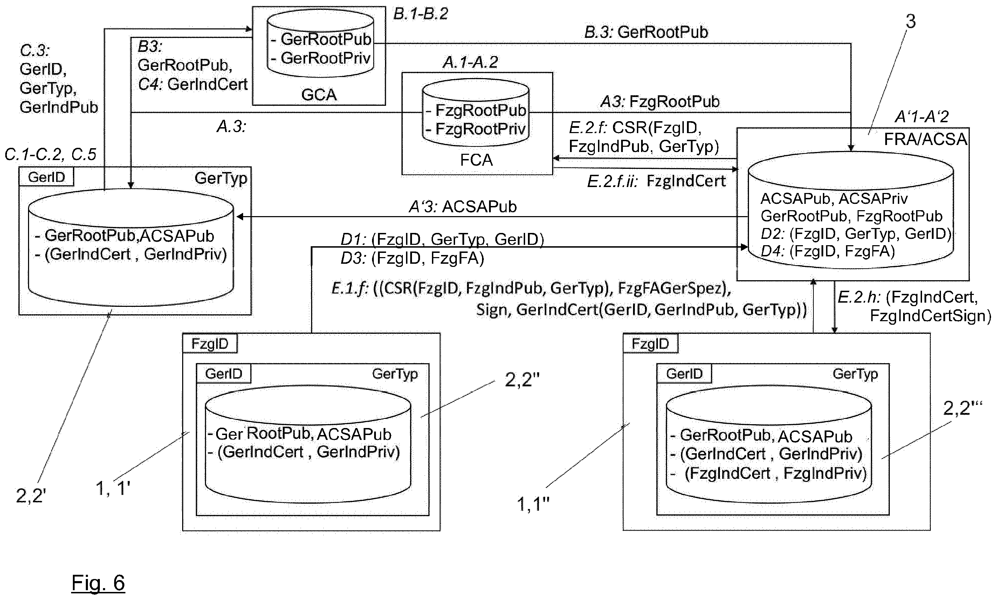

In dem Schema der Figur 5 wird das Schema nun auf die bevorzugte Verwendung in einem Fahrzeug-Ökosystem übertragen. Die verwendeten Variablen bekommen dafür ein F oder ein Fzg vorangestellt. Ansonsten ist der Ablauf analog zu dem der Figur 4 zu verstehen. Das System wird dabei durch ein Steuergerät mit einer Identifikation GerID in einem Fahrzeugt mit der Identifikation FzgID gebildet. Alles weitere ergibt sich analog bzw. durch den nachfolgend anhand der Figur 6 nochmal im Detail beschriebenen Ablauf. Die Bezeichnungen sind analog zur oben bereits erwähnten DE 10 2020 004 832 A1 gewählt.

Das Schema der Figur 6, welches letztlich eine Weiterbildung des Schemas der DE 10 2020 004 832 A1 darstellt, zeigt ein angedeutetes Fahrzeug 1 zweimal, nämlich einmal mit 1' bezeichnet bei der Herstellung und einmal mit 1" bezeichnet im Betrieb. Ein Steuergerät 2 ist ebenfalls mehrfach gezeigt, einmal mit 2' bezeichnet bei der Herstellung, ein weiteres Mal mit 2" bezeichnet in dem Fahrzeug 1' bei der Herstellung desselben und ein weiteres Mal in dem Fahrzeug 1" beim Betrieb. Dort ist das Steuergerät 2 dann mit 2‴ bezeichnet. Außerdem ist ein fahrzeugexterner Server 3 dargestellt, z.B. eine Backend-Server des jeweiligen OEM, eine Steuergeräte-Zertifizierungsstelle GCA und eine Fahrzeug-Zertifizierungsstelle FCA.

Dabei werden im Einzelnen folgende Schritte vorgeschlagen:
A: Aufsetzen einer Fahrzeug-Zertifizierungsstelle (FCA) für fahrzeugindividuelle Zertifikate (einmalig pro bestimmte Fahrzeugflotte)
   1. Es wird für die Fahrzeug-Zertifizierungsstelle (FCA) ein asymmetrisches Fahrzeug-Root-Schlüsselpaar (FzgRootPub, FzgRootPriv) erzeugt.
   2. Der private Schlüssel FzgRootPriv wird in der Fahrzeug-Zertifizierungsstelle (FCA) in einer sicheren Umgebung abgelegt und von der Fahrzeug-Zertifizierungsstelle (FCA) zum Ausstellen/Signieren von fahrzeugindividuellen Zertifikaten verwendet.
   3. Der öffentliche Schlüssel (FzgRootPub) wird an alle Systeme verteilt, die von der Fahrzeug-Zertifizierungsstelle (FCA) ausgestellte Zertifikate überprüfen können sollen, bspw. an das Backend und/oder an eine Fahrzeug-Registrierungsstelle (FRA), mit dem die Fahrzeuge sicher kommunizieren sollen.
A': Aufsetzen einer Fahrzeug-Registrierungsstelle (FRA) mit einer zusätzlichen Zertifikat-Signierstelle (ACSA) zum zusätzlichen Signieren fahrzeugindividueller Zertifikate (einmalig pro bestimmte Fahrzeugflotte)
   1. Es wird für die zusätzliche Zertifikat-Signierstelle (ACSA) ein asymmetrisches Schlüsselpaar (ACSAPub, ACSAPriv) erzeugt.
   2. Der private Schlüssel (ACSAPriv) wird in der zusätzlichen Zertifikat-Signierstelle (ACSA) in einer sicheren Umgebung abgelegt und von der zusätzlichen Zertifikat-Signierstelle (ACSA) zum zusätzlichen Signieren von der Fahrzeug-Zertifizierungsstelle (FCA) ausgestellter fahrzeugindividueller Zertifikate verwendet.
   3. Der öffentliche Schlüssel (ACSAPub) wird an alle Steuergeräte verteilt, die von der Fahrzeug-Zertifizierungsstelle (FCA) ausgestellte Zertifikate anfordern und empfangen können sollen.
   4. Der öffentliche Schlüssel (ACSAPub) der zusätzlichen Zertifikat-Signierstelle (ACSA) wird im Steuergerät manipulationssicher abgelegt.
B: Aufsetzen einer Geräte-Zertifizierungsstelle (GCA) (einmalig bspw. pro Steuergerätehersteller und einer bestimmten Menge von diesem Hersteller herzustellender Steuergeräte)
   1. Es wird für die Geräte-Zertifizierungsstelle (GCA) ein asymmetrisches Geräte-Root-Schlüsselpaar (GerRootPub, GerRootPriv) erzeugt.
   2. Der private Schlüssel (GerRootPriv) wird in der Geräte-Zertifizierungsstelle (GCA) in einer sicheren Umgebung abgelegt und von der Geräte-Zertifizierungsstelle (GCA) zum Ausstellen/Signieren von steuergeräteindividuellen Zertifikaten verwendet.
   3. Der öffentliche Schlüssel (GerRootPub) wird an alle Systeme verteilt, die von der Geräte-Zertifizierungsstelle (GCA) ausgestellte Zertifikate überprüfen können sollen, bspw. an die Fahrzeug-Registrierungsstelle (FRA).
C: Ausstatten des Steuergerätes mit initialem kryptographischem Material, insb. mit einem steuergeräteindividuellen Zertifikat (einmalig pro Steuergerät mit der individuellen Identität (GerID), des Typs (GerTyp), bspw. bei dessen Herstellung)
   1. Es wird ein steuergeräteindividuelles Schlüsselpaar (GerIndPub, GerlndPriv) für die Identität (GerID) erzeugt, vorzugsweise in einem in diesem Steuergerät verbauten Hardware Security Modul (HSM).
   2. Wird das Schlüsselpaar im Steuergerät erzeugt, verbleibt der private Schlüssel (GerlndPriv) dort. Wird das Schlüsselpaar außerhalb des Steuergerätes erzeugt, so wird der private Schlüssel (GerlndPriv) auf einem möglichst sicheren Weg in das Steuergerät eingebracht und verlässt dieses nicht wieder.
   3. Die Identität (GerID), der Gerätetyp (GerTyp) und der öffentliche Schlüssel (GerIndPub) werden an die Geräte-Zertifizierungsstelle (GCA) übermittelt, dort wird für die Identität (GerID), den öffentlichen Schlüssel (GerIndPub) und den Gerätetyp (GerTyp) mit Hilfe des privaten Schlüssels (GerRootPriv) ein Zertifikat (GerlndCert) erzeugt, wobei bspw. die Identität (GerID) als Teil des Subjects und Gerätetyp (GerTyp) bspw. als ein Zusatzfeld ("Extension") in das Zertifikat (GerlndCert) eingehen und die gesamten Daten mit dem privaten Schlüssel (GerRootPriv) signiert werden.
   4. Das Zertifikat (GerlndCert) wird von der Geräte-Zertifizierungsstelle (GCA) zurück zum Steuergerät mit der Identität (GerID) übertragen und dort abgelegt.
D: Erfassen der Fahrzeug-Identität und des Fahrzeug-Fingerabdrucks (einmalig pro Steuergerät des Typs (GerTyp) mit der Identität (GerID), bei dessen Einbau in ein Fahrzeug mit der Identität (FzgID) bspw. beim OEM)
   1. Beim Einbau des Steuergerätes mit der Identität (GerID) und dem Typ (GerTyp) in ein Fahrzeug mit der Identität (FzgID) wird das Datenpaket (FzgID, GerTyp, GerID) fälschungssicher erfasst und anschließend fälschungssicher an die Fahrzeug-Registrierungsstelle (FRA) übertragen.
   2. Die Fahrzeug-Registrierungsstelle (FRA) legt das Datenpaket (FzgID, GerTyp, GerID) manipulationssicher ab.
   3. Beim Bau des Fahrzeugs mit der Identität (FzgID) wird in einer sicheren Umgebung ein fälschungssicherer individueller digitaler Fingerabdruck (FzgFA) des Fahrzeugs erfasst und das Datenpaket (FzgID, FzgFA) manipulationssicher an die Fahrzeug-Registrierungsstelle (FRA) übertragen.
      a. In den Fingerabdruck können vielfältige individuelle Fahrzeugdaten, bspw. individuelle Identitäten verschiedener im Fahrzeug verbauter Geräte, vorzugsweise auch Daten, die nicht rückdokumentiert werden, einfließen, so dass dieser manuell nicht ohne weiteres nachgebaut werden kann.
      b. Der Fingerabdruck muss derart gestaltet sein, dass er von einem in einem Fahrzeug verbauten Steuergerät bei dessen Betrieb zumindest teilweise "nachgebaut" werden kann, indem die in den Fingerabdruck einfließenden Daten bspw. von im Fahrzeug verbauten anderen Steuergeräten eingesammelt werden, bspw. über die verschiedenen Fahrzeugbusse.
   4. Die Fahrzeug-Registrierungsstelle (FRA) legt das Datenpaket (FzgID, FzgFA) manipulationssicher ab.
E: Anfordern und Ausstellen eines Zertifikats während des Betriebs. Falls das Fahrzeug aus Sicht des Steuergerätes mit der Identität (GerID) ein oder ein neues Zertifikat benötigt, werden folgende Schritte durchgeführt.
   1. Das Steuergerät mit der Identität (GerID) und dem Gerätetyp (GerTyp)
      a. ermittelt seinen gerätespezifischen Fahrzeug-Fingerabdruck (FzgFAGerSpez), indem es die dafür notwendigen Informationen einsammelt,
      b. ermittelt die Identität (FzgID) des Fahrzeugs, in dem es verbaut ist,
      c. generiert in einer sicheren Umgebung ein Schlüsselpaar (FzgIndPub, FzgIndPriv) für das individuelle Fahrzeug-Zertifikat für die Identität (FzgID), wobei der private Schlüssel (FzgIndPriv) in der sicheren Umgebung verbleibt,
      d. erstellt einen Certificate Signing Request (CSR) für die Daten (FzgID, FzglndPub und GerTyp)
      e. erzeugt die Signatur (Sign), indem das Datenpaket (CSR(FzglD, FzglndPub, GerTyp), FzgFAGerSpez) mit dem individuellen Steuergeräteschlüssel (GerlndPriv) signiert wird,
      f. versendet das Datenpaket
         ((CSR(FzglD, FzglndPub, GerTyp), FzgFAGerSpez), Sign, GerlndCert(GerID, GerlndPub, GerTyp)) an die Fahrzeug-Registrierungsstelle (FRA)
   2. Die Fahrzeug-Registrierungsstelle (FRA) (nach Empfang des Datenpakets)
      a. prüft mit Hilfe des dort abgelegten Root-Schlüssels (GerRootPub) die Korrektheit des geräteindividuellen Zertifikats (GerlndCert)
      b. extrahiert aus dem Certificate Signing Request (CSR) die Fahrzeug-Identität (FzgID), extrahiert aus dem geräteindividuellen Zertifikat (GerlndCert) die Geräteidentität (GerID) und den Gerätetyp (GerTyp) und prüft, ob im Backend ein Eintrag für (FzgID, GerTyp, GerID) hinterlegt ist,
      c. prüft, ob für die Fahrzeug-Identität (FzgID) ein Eintrag (FzgID, FzgFA) hinterlegt ist,
      d. prüft, ob der in der empfangenen Nachricht enthaltene gerätespezifische Fahrzeug-Fingerabdruck (FzgFAGerSpez) zu dem allgemeinen Fahrzeug-Fingerabdruck (FzgFA) passt,
      e. falls eine der obigen Prüfungen fehlschlägt: leitet sie eine Sonderbehandlung ein,
      f. andernfalls: sendet den empfangenen CSR(FzgID, FzglndPub, GerTyp) für die Fahrzeug-Identität (FzgID) und den öffentlichen Schlüssel (FzglndPub) über einen geschützten Kanal an die Fahrzeug-Zertifizierungsstelle (FCA)
         i. die Fahrzeug-Zertifizierungsstelle (FCA) stellt anhand des CSR(FzglD, FzglndPub, GerTyp) für die Fahrzeug-Identität (FzgID) und den öffentlichen Schlüssel (FzglndPub) ein mit (FzgRootPriv) signiertes Zertifikat (FzglndCert) aus und
         ii. die Fahrzeug-Zertifizierungsstelle (FCA) schickt das Zertifikat (FzglndCert) zurück an die Fahrzeug-Registrierungsstelle (FRA), wobei in diesem Ausführungsbeispiel die Fahrzeug-Registrierungsstelle (FRA) auch die Übermittlung der Zertifikate von der Fahrzeug-Zertifizierungsstelle (FCA) an die anfordernden Steuergeräte übernimmt.
      g. die in der Fahrzeug-Registrierungsstelle (FRA) verbaute zusätzliche Zertifikat-Signierstelle (ACSA):
         i. prüft die Signatur des Zertifikats (FzglndCert) mit dem öffentlichen Schlüssel (FzgRootPub) und den Inhalt des Zertifikats (FzglndCert) anhand des Certificate Signing Request (CSR)
         ii. falls eine der obigen Prüfungen fehlschlägt: leitet sie eine Sonderbehandlung ein,
         iii. andernfalls: signiert sie das Zertifikat (FzglndCert) mit dem privaten Schlüssel (ACSAPub) der zusätzlichen Zertifikat-Signierstelle (ACSA) und erzeugt dabei die zusätzliche Signatur (FzglndCertSign)
      h. die Fahrzeug-Registrierungsstelle (FRA) schickt das Zertifikat (FzglndCert) und dessen zusätzliche Signatur (FzglndCertSign) an das Steuergerät mit der Identität (GerID), welches in dem Fahrzeug mit der Identität (FzgID) verbaut ist, zurück.
   3. Das Steuergerät mit der Identität (GerID)
      a. prüft das empfangene Zertifikat (FzglndCert), d.h.
         i. prüft die Korrektheit der empfangenen zusätzlichen Signatur (FzglndCertSign) mit dem öffentlichen Schlüssel (ACSAPub) der zusätzlichen Zertifikat-Signierstelle (ACSA)
         ii. prüft, ob das empfangene Zertifikat (FzglndCert) dem gesendeten CSR entspricht, d.h., ob (FzgID, FzglndPub, GerTyp) in beiden Datenstrukturen übereinstimmen
      b. schlägt eine der obigen Prüfungen fehl wird eine Ausnahmebehandlung eingeleitet, andernfalls wird das Zertifikat (FzglndCert) lokal abgelegt
   4. Ab jetzt ist das Steuergerät mit der Identität (GerID) im Besitzt eines auf die Fahrzeug-Identität ausgestellten Zertifikats und des dazugehörigen privaten Schlüssels und kann die vom Fahrzeug an dieses Steuergerät übertragenen Aufgaben wahrnehmen.

## Patentansprüche

1. Verfahren zur sicheren Ausstattung von Systemen mit einem individuellen Zertifikat, wobei eine Zertifizierungsstelle (CA) basierend auf einem asymmetrischen Schlüsselpaar (CARootPub, CARootPriv) etabliert wird, wobei ferner eine mit einem von dem asymmetrischen Schlüsselpaar(CARootPub, CARootPriv) der Zertifizierungsstelle (CA) unterschiedlichen asymmetrischen Schlüsselpaar (ACSAPub, ACSAPriv) ausgestattete zusätzliche Zertifikat-Signierstelle (ACSA) etabliert wird,
wobei der öffentliche Schlüssel (ACSAPub) der zusätzlichen Zertifikat-Signierstelle (ACSA) an alle Systeme, die von der Zertifizierungsstelle (CA) ausgestellte Zertifikate (Cert)von dieser, anfordern und empfangen wollen, verteilt wird, um anschließend im Zuge der Übermittlung eines von der Zertifizierungsstelle (CA) ausgestellten Zertifikats (Cert) von dieser an das das Zertifikat anfordernde System dieses Zertifikat, samt der Signatur, von der zusätzlichen Zertifikat-Signierstelle (ACSA) mit ihrem privaten Schlüssel (ACSAPriv) zu signieren und die auf diese Weise erzeugte Signatur (CertSign) an das das Zertifikat anfordernde System zusammen mit dem erzeugten Zertifikat (Cert) zu übermitteln, wonach die Korrektheit des empfangenen Zertifikats (Cert) und der empfangenen Signatur (CertSign) von dem das Zertifikat (Cert) anfordernden System mit Hilfe des dort zuvor abgelegten öffentlichen Schlüssels (ACSAPub) der zusätzlichen Zertifikat-Signierstelle (ACSA) geprüft wird, ohne die im Zertifikat (Cert) enthaltene Signatur mit dem öffentlichen Schlüssel (CARootPub) der Zertifizierungsstelle (CA) zu überprüfen, und wobei im Falle einer fehlgeschlagenen Prüfung der empfangenen Signatur (CertSign) eine Ausnahmebehandlung eingeleitet wird.

2. Verfahren nach Anspruch 1,
**dadurch gekennzeichnet, dass**
für zumindest ein im Certificate Signing Request (CSR) enthaltenes Datenfeld vom das Zertifikat (Cert) anfordernden/empfangenden System zu prüfen, ob der Wert dieses Datenfeldes in dem an die Zertifizierungsstelle (CA) übermittelten Certificate Signing Request (CSR) mit dem Wert dieses Datenfeldes im empfangenen Zertifikat (Cert) auf geeignete Weise übereinstimmt.

3. Verfahren nach Anspruch 1 oder 2,
**dadurch gekennzeichnet, dass**
die Zertifizierungsstelle (CA) oder eine Registrierungsstelle (RA) die zusätzliche Zertifikat-Signierstelle (ACSA) ausbildet.

4. Verfahren nach Anspruch 1, 2 oder 3,
**dadurch gekennzeichnet, dass**
die zusätzliche Zertifikat-Signierstelle (ACSA) so umgesetzt wird, dass sie in der Lage ist, festzustellen, ob das an das anfordernde/empfangende System weiterzuleitende Zertifikat (Cert) den Anforderungen dieses Systems genügt.

5. Verfahren nach Anspruch 4,
**dadurch gekennzeichnet, dass**
hierfür die zusätzliche Zertifikat-Signierstelle (ACSA), insbesondere einmalig, mit dem öffentlichen Schlüssel (CARootPub) der Zertifizierungsstelle (CA) ausgestattet wird und die Korrektheit der Signatur eines zusätzlich zu signierenden Zertifikats (Cert) von der zusätzlichen Zertifikat-Signierstelle (ACSA) vor der Berechnung der zusätzlichen Signatur (CertSign) überprüft wird.

6. Verfahren nach Anspruch 4 oder 5,
**dadurch gekennzeichnet, dass**
für jedes zu signierende Zertifikat (Cert) der zusätzlichen Zertifikat-Signierstelle (ACSA) der der Zertifikatsaustellung zugrundeliegende Certificate Signing Request (CSR) auf eine Weise bekanntgemacht wird, die eine sichere Zuordnung des Certificate Signing Request (CSR) zu dem zu signierenden Zertifikat (Cert) erlaubt.

7. Verfahren nach Anspruch 6,
**dadurch gekennzeichnet, dass**
hierfür der Certificate Signing Request (CSR) von der Zertifizierungsstelle (CA) geeignet abgesichert an die zusätzliche Zertifikat-Signierstelle (ACSA) übermittelt wird und anschließend von der zusätzlichen Zertifikat-Signierstelle (ACSA) überprüft wird, ob das zu signierende Zertifikat (Cert) dem Certificate Signing Request (CSR) auf geeignete Weise entspricht.

8. Verfahren nach Anspruch 6,
**dadurch gekennzeichnet, dass**
hierfür der Certificate Signing Request (CSR) von der Registrierungsstelle (RA) geeignet abgesichert an die zusätzliche Zertifikat-Signierstelle (ACSA) übermittelt wird und anschließend von der zusätzlichen Zertifikat-Signierstelle (ACSA) überprüft wird, ob das zu signierende Zertifikat (Cert) dem Certificate Signing Request (CSR) auf geeignete Weise entspricht.

9. Verfahren nach einem der Ansprüche 1 bis 8,
**dadurch gekennzeichnet, dass**
der private Schlüssel (ACSAPriv) der zusätzlichen Zertifikat-Signierstelle (ACSA) in der zusätzlichen Zertifikat-Signierstelle (ACSA) aufbewahrt wird.

10. Verfahren nach Anspruch 9,
**dadurch gekennzeichnet, dass**
die Aufbewahrung lesegeschützt erfolgt.

11. Verfahren nach einem der Ansprüche 1 bis 10,
**dadurch gekennzeichnet, dass**
der öffentliche Schlüssel (ACSAPub) der zusätzlichen Zertifikat-Signierstelle (ACSA) in den Systemen abgelegt wird.

12. Verfahren nach Anspruch 11,
**dadurch gekennzeichnet, dass**
die Ablage in den Systemen manipulationsgeschützt erfolgt.

13. Verfahren nach einem der Ansprüche 1 bis 12,
**dadurch gekennzeichnet, dass**
die Verteilung des öffentlichen Schlüssels (ACSAPub) der zusätzlichen Zertifikat-Signierstelle (ACSA) an alle Systeme integritätsgeschützt erfolgt.

14. Verfahren nach einem der Ansprüche 1 bis 6,
**dadurch gekennzeichnet, dass**
als die Systeme Steuergeräte in einem Fahrzeug verwendet werden.

## Claims

1. Method for securely equipping systems with an individual certificate, wherein a certification authority (CA) is established on the basis of an asymmetric key pair (CARootPub, CARootPriv), wherein an additional certificate signing authority (ACSA) that is equipped with an asymmetric key pair (ACSAPub, ACSAPriv) different from the asymmetric key pair (CARootPub, CARootPriv) of the certification authority (CA) is established,
wherein
the public key (ACSAPub) of the additional certificate signing authority (ACSA) is distributed to all systems that wish to request and receive certificates (Cert) issued by the certification authority (CA) in order to, during the transmission of a certificate (Cert) issued by the certification authority (CA) from the CA to the system requesting the certificate, sign this certificate, with the signature, by the additional certificate signing authority (ACSA) with its private key (ACSAPriv), and to transmit the generated signature (CertSign) together with the generated certificate (Cert) to the system requesting the certificate, whereupon the correctness of the received certificate (Cert) and the received signature (CertSign) is checked by the system requesting the certificate (Cert) using the public key (ACSAPub) of the additional certificate signing authority (ACSA) stored there beforehand, without checking the signature contained in the certificate (Cert) with the public key (CARootPub) of the certification authority (CA), and wherein, in the event of a failed checking of the received signature (CertSign), exception handling is initiated.

2. Method according to claim 1,
**characterized in that**
for at least one data field contained in the Certificate Signing Request (CSR), the system requesting/receiving the certificate (Cert) checks whether the value of this data field in the Certificate Signing Request (CSR) transmitted to the certification authority (CA) suitably corresponds to the value of this data field in the received certificate (Cert).

3. Method according to claim 1 or claim 2,
**characterized in that**
the certification authority (CA) or registration authority (RA) forms the additional certificate signing authority (ACSA).

4. Method according to claim 1, claim 2 or claim 3,
**characterized in that**
the additional certificate signing authority (ACSA) is implemented in such a way that it is able to determine whether the certificate (Cert) to be forwarded to the requesting/receiving system meets the requirements of this system.

5. Method according to claim 4,
**characterized in that**
for this purpose, the additional certificate signing authority (ACSA) is equipped, in particular once, with the public key (CARootPub) of the certification authority (CA), and the correctness of the signature of a certificate (Cert) additionally to be signed is checked by the additional certificate signing authority (ACSA) before the additional signature (CertSign) is generated.

6. Method according to claim 4 or claim 5,
**characterized in that**
for each certificate (Cert) to be signed by the additional certificate signing authority (ACSA), the Certificate Signing Request (CSR) underlying the certificate issuance must be published in a manner that allows a secure association of the Certificate Signing Request (CSR) with the certificate (Cert) to be signed.

7. Method according to claim 6,
**characterized in that**
for this purpose, the Certificate Signing Request (CSR) is suitably securely transmitted from the certification authority (CA) to the additional certificate signing authority (ACSA), and subsequently the additional certificate signing authority (ACSA) checks whether the certificate (Cert) to be signed suitably corresponds to the Certificate Signing Request (CSR).

8. Method according to claim 6,
**characterized in that**
for this purpose, the Certificate Signing Request (CSR) is suitably securely transmitted from the registration authority (RA) to the additional certificate signing authority (ACSA), and subsequently the additional certificate signing authority (ACSA) checks whether the certificate (Cert) to be signed suitably corresponds to the Certificate Signing Request (CSR).

9. Method according to any of claims 1 to 8,
**characterized in that**
the private key (ACSAPriv) of the additional certificate signing authority (ACSA) is stored in the additional certificate signing authority (ACSA).

10. Method according to claim 9,
**characterized in that**
the storage is write-only.

11. Method according to any of claims 1 to 10,
**characterized in that**
the public key (ACSAPub) of the additional certificate signing authority (ACSA) is stored in the systems.

12. Method according to claim 11,
**characterized in that**
the storage in the systems is protected against manipulation.

13. Method according to any of claims 1 to 12,
**characterized in that**
the public key (ACSAPub) of the additional certificate signing authority (ACSA) is distributed to all systems in an integrity-protected manner.

14. Method according to any of claims 1 to 6,
**characterized in that**
control units in a vehicle are used as the systems.

## Revendications

1. Procédé pour l'équipement sécurisé de systèmes comportant un certificat individuel, dans lequel une autorité de certification (CA) est établie sur la base d'une paire de clés asymétriques (CARootPub, CARootPriv), dans lequel est en outre établie une autorité de signature de certificat supplémentaire (ACSA) pourvue d'une paire de clés asymétriques (ACSAPub, ACSAPriv) différente de la paire de clés asymétriques (CARootPub, CARootPriv) de l'autorité de certification (CA),
dans lequel
la clé publique (ACSAPub) de l'autorité de signature de certificat supplémentaire (ACSA) est distribuée à tous les systèmes qui souhaitent demander et recevoir des certificats (Cert) délivrés par l'autorité de certification (CA), pour ensuite, au cours de la transmission d'un certificat (Cert) délivré par l'autorité de certification (CA) au système demandeur du certificat, signer ledit certificat, avec la signature, depuis l'autorité de signature de certificat supplémentaire (ACSA) avec sa clé privée (ACSAPriv) et transmettre la signature (CertSign) ainsi générée au système demandeur du certificat conjointement avec le certificat (Cert) généré, après quoi l'exactitude du certificat (Cert) reçu et de la signature (CertSign) reçue est vérifiée par le système demandeur du certificat (Cert) à l'aide de la clé publique (ACSAPub) de l'autorité de signature de certificat supplémentaire (ACSA) qui y a été préalablement stockée, sans vérifier la signature contenue dans le certificat (Cert) avec la clé publique (CARootPub) de l'autorité de certification (CA), et dans lequel, en cas d'échec de vérification de la signature (CertSign) reçue, un traitement d'exception est déclenché.

2. Procédé selon la revendication 1,
**caractérisé en ce que**
pour au moins un champ de données contenu dans la demande de signature de certificat (CSR), le système demandeur/récepteur du certificat (Cert) vérifie si la valeur dudit champ de données contenu dans la demande de signature de certificat (CSR) transmise à l'autorité de certification (CA) concorde d'une manière appropriée à la valeur dudit champ de données dans le certificat (Cert) reçu.

3. Procédé selon la revendication 1 ou 2,
**caractérisé en ce que**
l'autorité de certification (AC) ou une autorité d'enregistrement (RA) forme l'autorité de signature de certificat supplémentaire (ACSA).

4. Procédé selon la revendication 1, 2 ou 3,
**caractérisé en ce que**
l'autorité de signature de certificat supplémentaire (ACSA) est configurée de telle sorte qu'elle peut constater si le certificat (Cert) à transférer au système demandeur/récepteur satisfait aux exigences dudit système.

5. Procédé selon la revendication 4,
**caractérisé en ce que**
à cet effet, l'autorité de signature de certificat supplémentaire (ACSA) est équipée, en particulier une seule fois, de la clé publique (CARootPub) de l'autorité de certification (CA) et l'exactitude de la signature d'un certificat (Cert) à signer supplémentaire est vérifiée par l'autorité de signature de certificat supplémentaire (ACSA) avant la facturation de la signature (CertSign) supplémentaire.

6. Procédé selon la revendication 4 ou 5,
**caractérisé en ce que**
pour chaque certificat (Cert) à signer, l'autorité de signature de certificat supplémentaire (ACSA) est informée de la demande de signature de certificat (CSR) sur laquelle repose la délivrance de certificat d'une manière qui permet une attribution sûre de la demande de signature de certificat (CSR) au certificat (Cert) à signer.

7. Procédé selon la revendication 6,
**caractérisé en ce que**
à cet effet, la demande de signature de certificat (CSR) est transmise par l'autorité de certification (CA) d'une manière sécurisée de manière appropriée à l'autorité de signature de certificat supplémentaire (ACSA), puis l'autorité de signature de certificat supplémentaire (ACSA) vérifie si le certificat (Cert) à signer correspond d'une manière appropriée à la demande de signature de certificat (CSR).

8. Procédé selon la revendication 6,
**caractérisé en ce que**
à cet effet, la demande de signature de certificat (CSR) est transmise par l'autorité d'enregistrement (RA) d'une manière sécurisée de manière appropriée à l'autorité de signature de certificat supplémentaire (ACSA), puis l'autorité de signature de certificat supplémentaire (ACSA) vérifie si le certificat (Cert) à signer correspond d'une manière appropriée à la demande de signature de certificat (CSR).

9. Procédé selon l'une des revendications 1 à 8,
**caractérisé en ce que**
la clé privée (ACSAPriv) de l'autorité de signature de certificat supplémentaire (ACSA) est conservée dans l'autorité de signature de certificat supplémentaire (ACSA).

10. Procédé selon la revendication 9,
**caractérisé en ce que**
la conservation est effectuée de manière à être protégée en lecture seule.

11. Procédé selon l'une des revendications 1 à 10,
**caractérisé en ce que**
la clé publique (ACSAPub) de l'autorité de signature de certificat supplémentaire (ACSA) est stockée dans les systèmes.

12. Procédé selon la revendication 11,
**caractérisé en ce que**
le stockage dans les systèmes est effectué de manière à être protégé contre toute manipulation.

13. Procédé selon l'une des revendications 1 à 12,
**caractérisé en ce que**
la distribution de la clé publique (ACSAPub) de l'autorité de signature de certificat supplémentaire (ACSA) à tous les systèmes est effectuée de manière à être protégée en intégrité.

14. Procédé selon l'une des revendications 1 à 6,
**caractérisé en ce que**
des appareils de commande sont utilisés sous forme de systèmes dans un véhicule.
